# EUROPÄISCHE PATENTSCHRIFT

(11) **EP 0 622 543 B1**
(45) Veröffentlichungstag und Bekanntmachung des Hinweises auf die Patenterteilung: **02.05.1997**
(21) Anmeldenummer: 94102451.5
(22) Anmeldetag: 18.02.1994
(51) Int. Cl.: F03B 3/14, F03B 3/10

(54) **Verstelleinrichtung hydraulischer Art**
Hydraulic adjusting system
Dispositif de réglage hydraulique

(30) Priorität: 27.02.1993 DE 4306133
(43) Veröffentlichungstag der Anmeldung: 02.11.1994
(73) Patentinhaber: KSB Aktiengesellschaft, 67227 Frankenthal (DE)
(72) Erfinder: Schaaf, Günter, D-28277 Bremen (DE); Schäfer, Horst, D-27404 Rhade (DE); Scholz, Bernhard, D-28325 Bremen (DE); Beiss, Günter, D-28307 Bremen (DE)

(56) Entgegenhaltungen:
- EP-A- 0 228 697
- EP-A- 0 395 420
- DE-C- 694 029
- GB-A- 1 089 556
- US-A- 2 073 044
- US-A- 2 518 925
- US-A- 4 366 671

## Beschreibung

Die Erfindung betrifft eine Verstelleinrichtung gemäß dem Oberbegriff des Hauptanspruches.

Beispielsweise für die Förderung von großen Wassermengen bei kleinen bis mittleren Förderhöhen werden vorzugsweise Propellerpumpen mit axial und halbaxial angeordneten Propellerschaufeln eingesetzt. Diese Pumpen dienen der Oberflächenentwässerung, dem Einsatz in Kläranlagen, Hochwasserpumpstationen und ähnlichem, wobei in diesen Bereichen häufig das Problem der schwankenden oder unterschiedlichen Zulaufmengen und Zulaufhöhen besteht. Entsprechendes gilt für zur Energiegewinnung eingesetzte Turbinenaggregate. Um bei diesen unterschiedlichen Bedingungen die Strömungsmaschine im Bereich des günstigsten Wirkungsgrades betreiben zu können, finden Verstellpropeller Anwendung. Somit können während des Betriebes die einzelnen Schaufeln in Abhängigkeit von den Zulaufverhältnissen eingestellt werden. Der Verstellmechanismus der Verstellpropeller ist direkt oder indirekt von einem Elektromotor oder Hydrauliksystem antreibbar. Für die Verstellpropeller selbst sind die unterschiedlichsten Verstellmechanismen bekannt.

Die DE-PS 694 029 zeigt eine gattungsgemäße Verstelleinrichtung. Diese besteht aus einer Welle mit daran befestigtem Verstellpropeller, hydraulischen Übertragungselementen innerhalb der Welle und einem Übertragungselement zur Einspeisung der Hydraulikflüssigkeit in die Welle. Die energiereiche Hydraulikflüssigkeit, die von einer externen Quelle zugeführt wird, wirkt auf ein Verstellgetriebe - hier als Motor bezeichnet - innerhalb des Propellers. Nachteilig bei dieser Lösung ist das einspeisende Übertragungselement, da bei eventuellen Undichtigkeiten Hydraulikflüssigkeit in die Umgebung gelangen kann.

Durch die US-A-2 518 925 ist eine Verstelleinrichtung bekannt, bei der in der Wand eines Ölbehälters die Zahnräder einer Ölpumpe gelagert sind. Die Lager und Antriebswellen der Pumpe müssen sicher gegenüber der Umgebung abgedichtet sein. Nachteilig bei dieser Lösung ist die herausgeführte und daher durch äußere Angriffe gefährdete Druckleitung. Zusätzlich muß aufgrund dieser Art der Ölversorgung die außenliegende Einspeisestelle für das Drucköl sehr aufwendig gegen eventuelle Leckagen abgedichtet werden. Gleiches ist im Bereich der Krafteinleitung für den Verstellvorgang erforderlich. Das innerhalb der Welle befindliche Öl muß dort gegen einen Austritt gesichert sein.

Der Erfindung liegt das Problem zugrunde, für einen hydraulisch betätigbaren Verstellpropeller einen zuverlässigen Antriebsmechanismus in wenig aufwendiger Bauweise und für hohe Verstellmomente zu entwickeln. Die Lösung dieses Problems erfolgt gemäß dem kennzeichnenden Teil des Anspruches 1.

Durch die Anordnung der Hydraulikpumpe desjenigen Raumes, der mit Hydraulikflüssigkeit gefüllt ist - gewöhnlich ein Öl zur Schmierung von Wellenlagern und/oder der inneren Gleitringdichtungen - kann in einfachster Weise und gefahrlos die Übertragung der Hydraulikflüssigkeit in die Welle erfolgen. Da dieser Raum sowieso gegenüber der Umgebung hermetisch abgedichtet ist, stellt eine eventuelle Leckage von Hydraulikflüssigkeit zwischen Welle und Übertragungssystem keinerlei Gefährdung für die Umgebung dar. Die Hydraulikpumpe, deren Bauart in keiner Weise beschränkt ist, saugt aus dem die Hydraulikflüssigkeit enthaltenden Raum an. Somit muß nur noch die Hydraulikflüssigkeit in bekannter Weise dem Verstellpropeller zugeführt werden. Die Hydraulikflüssigkeit wird dann durch die Übertragungselemente in der Welle in den Raum zurück gefördert.

Eine Ausgestaltung der Erfindung sieht hierzu vor, daß die Hydraulikpumpe neben der Welle angeordnet und durch mechanische Übertragungselemente von der Welle antreibbar ist. Dies bietet den Vorteil, daß keine Sonderkonstruktionen bezüglich des Aufbaues der Welle erfolgen müssen und daß lediglich eine übliche Hydraulikpumpe ihr Arbeitsergebnis in die Welle einspeist. Die Antriebskräfte werden durch bekannte Übertragungsmittel von der Welle auf die Pumpe übertragen.

Jedoch sollte diese Lösung nur bei Anlagen Anwendung finden, bei denen eine Verstellung des Propellers nur während des Betriebes beabsichtigt ist.

Ist eine Verstellung im Stillstand erforderlich, ist nach einer anderen Ausgestaltung die Hydraulikpumpe neben der Welle angeordnet und durch einen Elektromotor antreibbar.

Eine weitere Lösung sieht hierzu vor, daß die Hydraulikpumpe innerhalb der Welle oder einem Wellenteil angeordnet ist und damit rotiert. So kann z. B. ein Flansch der Welle hohl ausgebildet sein, um darin Raum für die Aufnahme der Hydraulikpumpe zu erhalten.

Eine weitere Ausgestaltung der Erfindung sieht vor, daß ein zwischen Motor oder Generator angeordnetes Getriebe die Hydraulikpumpe antreibt. Eine derartige Lösung ist beispielsweise bei Tauchmotorpumpen denkbar, bei denen ein schnelläufiger Motor einen langsamläufigen Verstellpropeller anzutreiben hat. Im umgekehrten Fall kann dies natürlich auch bei entsprechend ausgelegten Turbinen der Fall sein. Die Drehzahlunterschiede werden dann durch ein Getriebe umgewandelt, welches gleichzeitig die Hydraulikpumpe mit antreibt. Als Antriebsdrehzahl für die Hydraulikpumpe wird dabei die Differenzdrehzahl zwischen Antriebs- und Abtriebswelle benutzt. Diese Lösung ist für Anlagen geeignet, bei denen eine Verstellung des Propellers nur während des Betriebes beabsichtigt ist.

Bei Anlagen, bei denen eine Verstellung des Propellers während des Betriebes vorgesehen ist, sieht eine weitere Ausgestaltung vor, daß ein am Motor oder Generator angeordneter, die Wellen und/oder Wellenteile mit einem ein- oder mehrteiligen Übertragungselement durchdringender Stellmotor die Hydraulikpumpe antreibt. Dieser Elektromotor wäre dann auf einer Motor- bzw. Generatorseite angeordnet und würde dessen Motor- bzw. Generatorwelle mit einem ein- oder mehrteiligen Übertragungselement durchdringen, um somit die Hydraulikpumpe anzutreiben. Je nach Bauart der Hydraulikpumpe kann es sich bei dem Übertragungselement um ein rotierendes oder ein längsverschiebliches Bauteil handeln.

Wiederum eine andere Lösung der Erfindung sieht eine Hydraulikpumpe mit intermittierender Betriebsweise vor. Je nach dem Anwendung findenden Verstellgetriebe innerhalb des Verstellpropellers ist es möglich, beispielsweise durch kurzfristige Druckstöße oder einen sogenannten pumpenden Betrieb die Schaufeln in kleinen Verstellschritten in die jeweils gewünschte Position zu bringen.

Als vorteilhaft hat sich diese Lösung bei kompakten Tauchaggregaten, insbesondere Tauchmotorpumpenaggregaten gezeigt, da hier im allgemeinen ein Ölvorlageraum zur Aufnahme der Axiallager und/oder der Radiallager sowie Gleitringdichtungen und Öl zur Schmierung derselben vorhanden ist. Gegenüber dem zu fördernden Medium sind keine zusätzlichen Drehdurchführungen erforderlich und während des Verstell- bzw. Regelvorganges der Schaufeln werden auf die rotierenden Teile nur geringe Kräfte übertragen. Als wesentlicher Vorteil ist die Tatsache anzusehen, daß außerhalb der Verstell- oder Regelzeiten keine Verstellkräfte auf die rotierenden Teile einwirken. Sollten dennoch innerhalb des Hydrauliksystems Leckagen, beispielsweise im Bereich der Drehdurchführung auftreten, so haben sie keinerlei Auswirkungen auf die restlichen Pumpen- oder Turbinenteile und können nicht zur Schädigung oder zum Ausfall anderer Funktionsgruppen führen. Da die Durchführungen und die Hydraulikpumpe in dem mit Öl gefüllten Raum angeordnet sind, stellt eine eventuelle Leckage nur ein Rückströmen in den Vorratsbehälter dar. Zur Übertragung der Hydraulikkräfte auf das Verstellgetriebe innerhalb des Verstellpropellers können unterschiedliche Lösungen Anwendung finden.

Weitere Ausgestaltungen sehen für den Antrieb einer Hydraulikpumpe ein elektromechanisches und/oder elektrothermisches Funktionsprinzip sowie mechanisch und/oder elektromechanisch betätigbare Schaltelemente zur Steuerung der Hydraulikflüssigkeit. Damit ist die Verwendung von reibungsarmen und energiesparenden Elementen möglich.

Ein ganz wesentlicher Vorteil dieser Lösungen besteht darin, daß keine zusätzlichen Stege, Rippen, Dichtungen, Lagerungen oder sonstige Bauteile für eine Energiezufuhr im Bereich des Verstellpropellers Anwendung finden. Da diese Teile direkt dem Strömungsmedium ausgesetzt sind, besteht immer die Gefahr einer Beeinflussung des Strömungsquerschnittes durch das Bauteil selbst und durch zusätzliche Verschmutzungen, die mit dem Fördermedium in den Bereich des Verstellpropellers gelangen sowie bei einer eventuellen Leckage die Verunreinigung des Fördermediums.

Ein Ausführungsbeispiel der Erfindung ist in den Zeichnungen dargestellt und wird im folgenden näher beschrieben. Es zeigen die
- Fig. 1: eine in einer Welle angeordnete Hydraulikpumpe, die
- Fig. 2: einen Antrieb der Hydraulikpumpe durch einen Elektromotor und die
- Fig. 3: eine neben der Welle angeordnete Hydraulikpumpe.

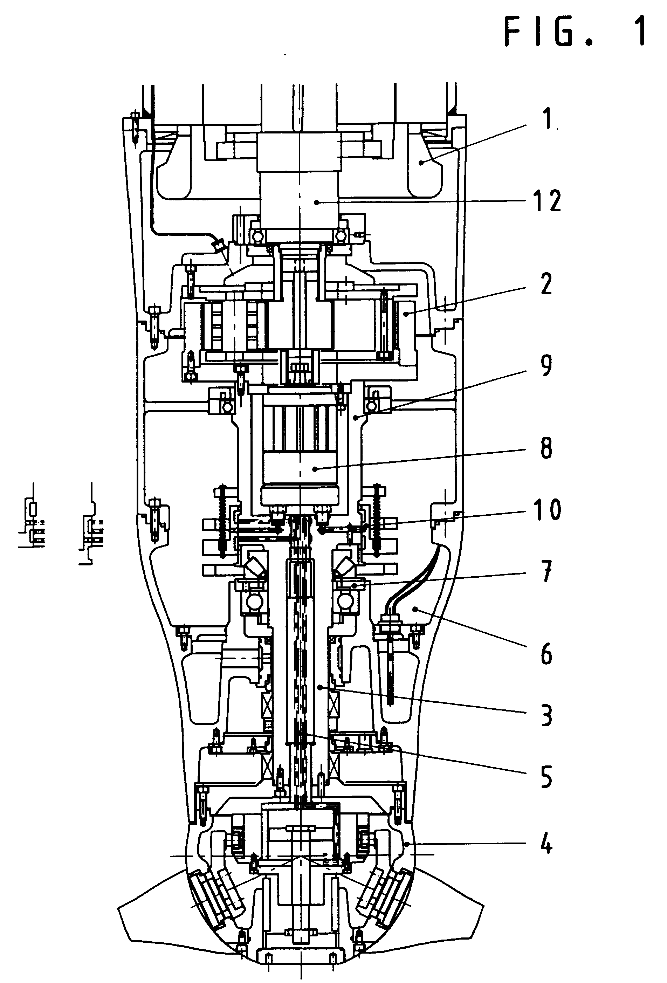

Beispielhaft für eine Strömungsmaschine ist in der Fig. 1 eine Tauchmotorpumpe gezeigt. Diese besteht aus einem Motor 1, dessen Drehzahl durch ein nachgeordnetes Getriebe 2 beeinflußt wird. In diesem Beispiel handelt es sich um ein Untersetzungsgetriebe, welches aber für andere Strömungsmaschinenbauarten nicht zwingend ist. Das Getriebe wirkt auf eine Welle 3, die mit einem Verstellpropeller 4 versehen ist. Innerhalb der Welle 3 befinden sich Übertragungselemente 5 für eine Hydraulikflüssigkeit. Die Welle 3 durchdringt einen mit Hydraulikflüssigkeit gefüllten Raum 6, mit einer darin angeordneten Lagerung 7. Bei der Hydraulikflüssigkeit kann es sich um Öl, Wasser oder ein anderes inkompressibles Medium handeln. Dies ist abhängig von der Bauart der Lagerung 7. Eine Hydraulikpumpe 8 ist hier in einem hohlen Flanschteil 9 der Welle 3 angeordnet und rotiert mit der Wellendrehzahl. Zum Antrieb der Hydraulikpumpe 8 wird die Differenzdrehzahl des Getriebes 2 verwendet. Die Hydraulikpumpe 8 saugt direkt aus dem Raum 6 an und fördert in die übertragungselemente 5. Bei der Arbeit der Hydraulikpumpe während eines Verstellvorganges ist die Belastung der Anlage gering. Zur Steuerung des Hydrauliksystems befinden sich auf der Welle 3 bzw. dessen Flanschteil 9 als Schiebersteuerung ausgebildete Schaltelemente 10. Deren Betätigung kann in einfacher Weise auf elektromagnetischem Wege erfolgen. Links neben der Zeichnung sind noch zwei verschiedene Positionen des Schaltelementes 10 ausschnitthaft dargestellt. Damit ist während eines Verstellvorganges in einfachster Weise eine Beeinflussung der Hydraulikflüssigkeit möglich.

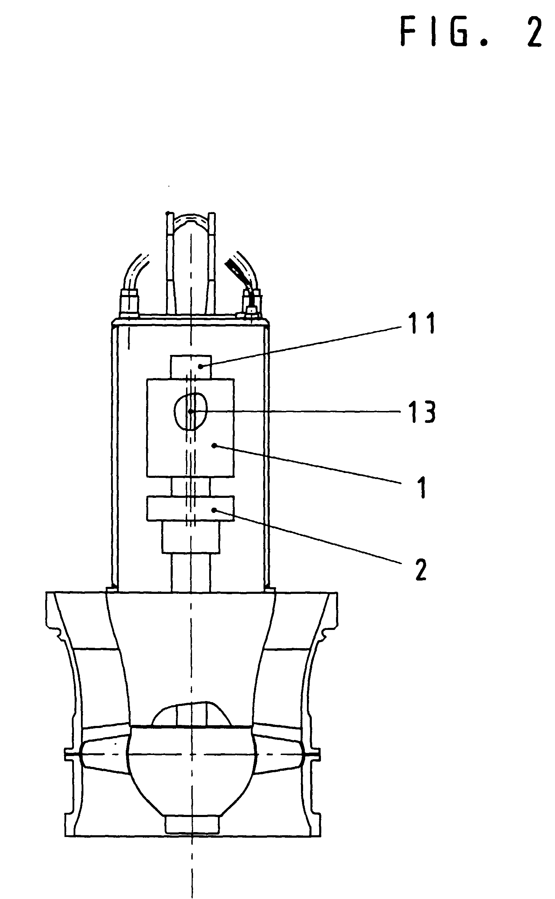

In der Fig. 2 ist schematisch eine Ausführungsform gezeigt, bei der eine gemäß Fig. 1 angeordnete Hydraulikpumpe 8 durch einen separaten Stellmotor 11 angetrieben wird. Zu diesem Zweck weist die Welle 12 des Motors bzw. Generators 1 eine Bohrung auf, in der ein kräfteübertragendes Bauteil 13 angeordnet ist. Hierbei kann es sich um eine rotierende Welle oder um eine axial verschiebliche Schubstange handeln. Dies ist abhängig von dem jeweils Anwendung findenden Hydraulikpumpen- und Stellmotortyp. Grundsätzlich gilt für alle Ausführungsarten, daß ein Getriebe 2 wahlweise Anwendung finden kann. Dies ist von den zur Anwendung gelangenden Motor- oder Generatorbauarten abhängig.

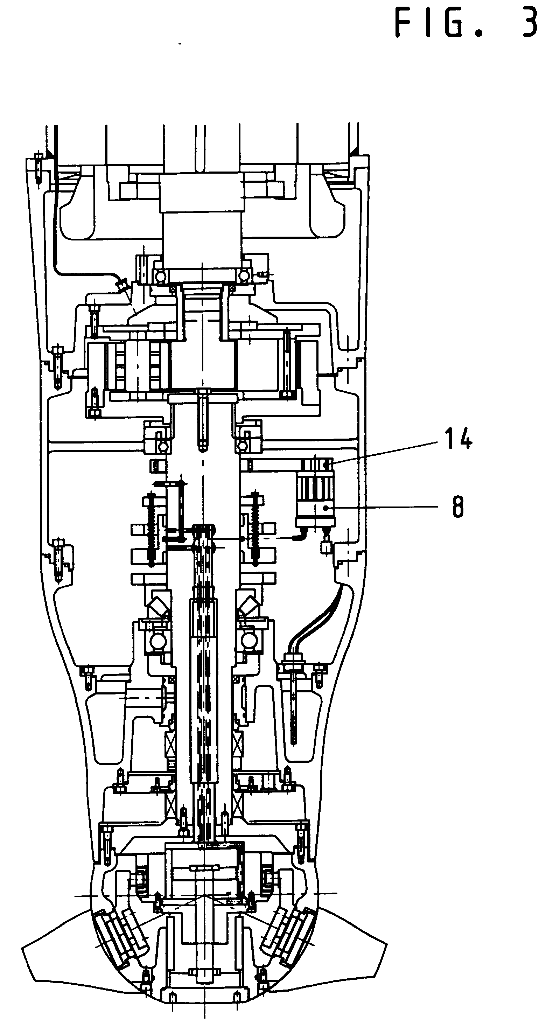

In der Fig. 3 ist eine Variante gezeigt, bei der die Hydraulikpumpe 8 als ein neben der Welle 3 angeordnetes Bauteil Verwendung findet. Hierbei kann durch Übertragungselemente 14 die Hydraulikpumpe 8 von der Welle 3 aus angetrieben werden. Als Übertragungselemente 14 sind die bekannten Mittel zur Kräfteübertragung einsetzbar. Selbstverständlich ist es auch möglich, die Hydraulikpumpe 8 durch einen ebenfalls im Raum 6 befindlichen Elektro- oder Stellmotor direkt antreiben zu lassen. Dies bietet die Möglichkeit zu einer Schaufelverstellung auch bei stillstehender Strömungsmaschine. In den Raum 6 wäre dann lediglich eine einfach abzudichtende elektrische Versorgungsleitung einzuführen.

Der wesentliche Vorteil dieser Lösungen besteht darin, daß die hydraulische Verstelleinrichtung innerhalb desjenigen Raumes angeordnet ist, der ohnehin mit Hydraulikflüssigkeit gefüllt und gegenüber der Umgebung abgedichtet ist. Zusätzliche und ein Ausfallrisiko bildende Abdichtungen sind nicht erforderlich.

Die Hydraulikpumpe kann auch an einer anderen Stirnseite des Motors oder Generators angeordnet sein. In dem Fall würde dann die Übertragung der Hydraulikflüssigkeit auch durch die Welle des Motors oder Generators erfolgen.

## Patentansprüche

1. Verstelleinrichtung hydraulischer Art für Strömungsmaschinen mit einem Verstellpropeller, wobei in und an einer mit dem Verstellpropeller verbundenen Welle Übertragungselemente zur Führung einer Hydraulikflüssigkeit angeordnet sind, die Welle (3) einen Hydraulikflüssigkeit enthaltenden Raum (6) der Strömungsmaschine ganz oder teilweise durchdringt, **dadurch gekennzeichnet,** daß der Raum (6) gegenüber der Umgebung hermetisch abgedichtet ist, daß innerhalb des Raumes (6) eine Hydraulikpumpe (8), Schaltelemente (10) und Übertragungselemente (5,14) derart angeordnet sind, daß eine eventuelle Leckage zwischen Hydraulikpumpe (8), Schaltelementen (10) und Übertragungselementen (5,14) ein Rückströmen in den Raum (6) darstellt.

2. Verstelleinrichtung nach Anspruch 1, dadurch gekennzeichnet, daß die Hydraulikpumpe (8) neben der Welle (3) angeordnet ist und durch mechanische Übertragungselemente (14) beim Betrieb der Strömungsmaschine von der Welle (3) antreibbar ist.

3. Verstelleinrichtung nach Anspruch 1, dadurch gekennzeichnet, daß die Hydraulikpumpe (8) neben der Welle (3) angeordnet und durch einen Elektromotor antreibbar ist.

4. Verstelleinrichtung nach Anspruch 1, dadurch gekennzeichnet, daß die Hydraulikpumpe (8) innerhalb der Welle (3) oder einem Wellenteil angeordnet ist und damit rotiert.

5. Verstelleinrichtung nach Anspruch 4, dadurch gekennzeichnet, daß ein zwischen Motor oder Generator (1) angeordnetes Getriebe (2) die Hydraulikpumpe (8) antreibt.

6. Verstelleinrichtung nach Anspruch 4, dadurch gekennzeichnet, daß ein am Motor oder Generator (1) angeordneter, die Wellen und/oder Wellenteile mit einem ein- oder mehrteiligen Übertragungselement (13) durchdringender Stellmotor (11) die Hydraulikpumpe (8) antreibt.

7. Verstelleinrichtung nach einem oder mehreren der Ansprüche 1 bis 6, dadurch gekennzeichnet, daß die Hydraulikpumpe (8) eine intermittierende Betriebsweise aufweist.

8. Verstelleinrichtung nach Anspruch 7, dadurch gekennzeichnet, daß die Hydraulikpumpe (8) ein elektromechanisches und/oder elektrothermisches Funktionsprinzip aufweist.

9. Verstelleinrichtung nach einem oder mehreren der Ansprüche 1 bis 8, dadurch gekennzeichnet, daß mechanischen und/oder elektromechanisch betätigbare Schaltelemente (10) den Weg der Hydraulikflüssigkeit steuern.

## Claims

1. Hydraulic adjusting device for fluid-flow machines having a variable-pitch propeller, transmission elements for conducting a hydraulic fluid being arranged in and on a shaft connected to the variable-pitch propeller, and the shaft (3) passing completely or partly through a space (6) of the fluid-flow machine, which space (6) contains a hydraulic fluid, characterized in that the space (6) is hermetically sealed off from the environment, in that a hydraulic pump (8), control elements (10) and transmission elements (5, 14) are arranged inside the space (6) in such a way that any leakage between hydraulic pump (8), control elements (10) and transmission elements (5, 14) constitutes a return flow into the space (6).

2. Adjusting device according to Claim 1, characterized in that the hydraulic pump (8) is arranged next to the shaft (3) and can be driven from the shaft (3) by mechanical transmission elements (14) during operation of the fluid-flow machine.

3. Adjusting device according to Claim 1, characterized in that the hydraulic pump (8) is arranged next to the shaft (3) and can be driven by an electric motor.

4. Adjusting device according to Claim 1, characterized in that the hydraulic pump (8) is arranged inside the shaft (3) or a shaft part and rotates with it.

5. Adjusting device according to Claim 4, characterized in that a gear (2) arranged between motor or generator (1) drives the hydraulic pump (8).

6. Adjusting device according to Claim 4, characterized in that a servomotor (11) arranged on the motor or generator (1) and passing through the shafts and/or shaft parts with a one-piece or multi-piece transmission element (13) drives the hydraulic pump (8).

7. Adjusting device according to one or more of Claims 1 to 6, characterized in that the hydraulic pump (8) has an intermittent mode of operation.

8. Adjusting device according to Claim 7, characterized in that the hydraulic pump (8) has an electromechanical and/or electrothermal operating principle.

9. Adjusting device according to one or more of Claims 1 to 8, characterized in that mechanical and/or electromechanically operable control elements (10) control the path of the hydraulic fluid.

## Revendications

1. Dispositif de réglage de type hydraulique pour des turbomachines comportant un impulseur réglable, des éléments de transmission destinés au guidage d'un fluide hydraulique étant montés dans et sur un arbre relié à l'impulseur réglable, l'arbre (3) pénétrant entièrement ou en partie dans une chambre (6) de la turbomachine contenant un fluide hydraulique, **caractérisé en ce que** la chambre est rendue hermétiquement étanche par rapport à l'extérieur, qu'une pompe hydraulique (8), des éléments (10) de commutation et des éléments (5,14) de transmission sont montés dans la chambre (6), de telle sorte qu'une éventuelle fuite entre la pompe (8) hydraulique, les éléments (10) de commutation et les éléments (5,14) de transmission constitue un reflux dans la chambre (6).

2. Dispositif de réglage suivant la revendication 1, caractérisé en ce que la pompe hydraulique (8) est montée à côté de l'arbre (3) et peut être entraînée par des éléments mécaniques (14) de transmission lorsque la turbomachine fonctionne par l'arbre (3).

3. Dispositif de réglage suivant la revendication 1, caractérisé en ce que la pompe hydraulique (8) est montée à côté de l'arbre (3) et peut être entraînée par un moteur électrique.

4. Dispositif de réglage suivant la revendication 1, caractérisé en ce que la pompe hydraulique (8) est montée dans l'arbre (3) ou dans une partie de l'arbre et tourne avec lui.

5. Dispositif de réglage suivant la revendication 4, caractérisé en ce qu'un motoréducteur (2) monté entre le moteur ou la génératrice (1) entraîne la pompe hydraulique (8).

6. Dispositif de réglage suivant la revendication 4, caractérisé en ce qu'un servomoteur (11) monté sur le moteur ou sur la génératrice (1) et traversant les arbres et/ou des parties des arbres par un élément (13) de transmission en une ou plusieurs parties entraîne la pompe hydraulique (8).

7. Dispositif de réglage suivant l'une ou plusieurs des revendications 1 à 6, caractérisé en ce que la pompe hydraulique (8) a un mode de fonctionnement intermittent.

8. Dispositif de réglage suivant la revendication 7, caractérisé en ce que la pompe hydraulique (8) a un principe de fonctionnement électromécanique et/ou électrothermique.

9. Dispositif de réglage suivant l'une ou plusieurs des revendications 1 à 8, caractérisé ce que des éléments (10) de commutation pouvant être actionnés mécaniquement et/ou électromécaniquement commandent le trajet du fluide hydraulique.
